# FASCICULE DE BREVET EUROPEEN

(11) **EP 0 499 536 B1**
(45) Date de publication et mention de la délivrance du brevet: **17.11.1994**
(21) Numéro de dépôt: 92400371.8
(22) Date de dépôt: 12.02.1992
(51) Int. Cl.: G01D 13/28, G01D 11/28

(54) **Aiguille éclairante**
Beleuchteter Zeiger
Illuminated pointer

(30) Priorité: 13.02.1991 FR 9101662
(43) Date de publication de la demande: 19.08.1992
(73) Titulaire: JAEGER, F-92303 Levallois-Perret (FR)
(72) Inventeur: Touil, Fredj, F-93200 Saint-Denis (FR)
(74) Mandataire: Schrimpf, Robert

(56) Documents cités:
- EP-A- 0 295 165
- EP-A- 0 411 799
- DE-A- 3 824 391
- PATENT ABSTRACTS OF JAPAN, vol. 8, no. 141 (P-283), 30 Juin 1984 & JP-A-59040205

## Description

La présente invention concerne le domaine des aiguilles pour appareils indicateurs.

La présente invention s'applique tout particulièrement, mais non exclusivement, à la conception de tableaux de bord de véhicules automobiles.

Plus précisément encore, la présente invention concerne le domaine des aiguilles éclairantes.

L'utilisation d'aiguilles éclairantes a pour fonction essentielle de faciliter l'observation des appareils indicateurs la nuit, ou d'une façon plus générale lorsque la lumière ambiante est déficiente.

Les aiguilles indicatrices sont généralement formées d'un moyeu destiné à être chassé sur un arbre de commande et supportant un corps d'aiguille allongé.

On connaît deux types principaux d'aiguilles indicatrices.

Les aiguilles du premier type peuvent être réalisées en un matériau opaque sur le plan optique. Elles sont pourvues, sur la surface avant visible, d'un revêtement coloré ou sont associées à des sources lumineuses placées sur l'avant pour éclairer le revêtement en cas d'éclairage ambiant insuffisant.

Ces aiguilles ont déjà rendu de grands services. Cependant, elles apparaissent peu lumineuses par comparaison avec les aiguilles dites éclairantes. De ce fait, elles ne donnent pas entière satisfaction quant à l'esthétique, l'agrément et la fiabilité de l'observation.

Les aiguilles du second type dites éclairantes sont formées pour l'essentiel d'un matériau transparent sur le plan optique et sont associées à des sources lumineuses placées latéralement ou sur l'arrière de l'aiguille pour injecter la lumière dans le corps de l'aiguille qui sert de guide de lumière. Une telle aiguille est décrite, par exemple, dans le document EP-A-0 295 165. Les aiguilles dites éclairantes sont préférées de nos jours aux aiguilles du premier type précité.

Le but principal de la présente invention est d'améliorer l'esthétique des aiguilles éclairantes.

Un but auxiliaire de la présente invention est de simplifier les aiguilles dites éclairantes précédemment proposées.

Un autre but auxiliaire de la présente invention est de proposer une aiguille éclairante adaptée pour être éclairée de façon uniforme sur la majeure partie de sa longueur.

Les buts précités sont atteints, selon la présente invention, grâce à une aiguille du type comprenant une pièce formée d'un corps allongé en matériau optiquement transparent solidaire d'un moyeu, caractérisée par le fait que le corps allongé possède au moins une face avant et deux faces latérales qui convergent en éloignement de la face avant, et que le moyeu possède au moins une structure apte à renvoyer la lumière provenant d'une source lumineuse en direction des faces latérales du corps.

Selon une autre caractéristique avantageuse de la présente invention, le corps en matériau optiquement transparent possède une face inférieure généralement cylindrique de révolution.

Selon une autre caractéristique avantageuse de la présente invention, le moyeu comprend deux surfaces de réflexion aptes à renvoyer la lumière provenant d'une source lumineuse en direction respectivement de chacune des faces latérales du corps.

Selon une autre caractéristique avantageuse de la présente invention, le moyeu comprend une surface de réflexion apte à renvoyer la lumière provenant d'une source lumineuse en direction de la face inférieure du corps en matériau optiquement transparent.

D'autres caractéristiques, buts et avantages de la présente invention apparaîtront à la lecture de la description détaillée qui va suivre, et en regard des dessins annexés, donnés à titre d'exemple non limitatif et sur lesquels :
- la figure 1 représente une vue de dessous d'une aiguille éclairante complète conforme à la présente invention,
- la figure 2 représente une vue de la même aiguille, selon un plan de coupe longitudinale référencé II-II sur la figure 1,
- la figure 3 représente une vue de dessus du corps en matériau optiquement transparent de l'aiguille conforme à la présente invention,
- la figure 4 représente une vue en coupe longitudinale du même corps selon le plan de coupe référencé IV-IV sur la figure 3,
- la figure 5 représente une vue de dessous du même corps d'aiguille,
- la figure 6 représente une vue schématique en perspective du moyeu du corps d'aiguille,
- la figure 7 représente une vue en coupe transversale du corps d'aiguille, selon le plan de coupe référencé VII-VII sur la figure 4,
- la figure 8 représente une vue de dessus d'un contre-poids d'aiguille,
- la figure 9 représente une vue de dessous du même contre-poids,
- la figure 10 représente une vue en coupe longitudinale du contre-poids selon le plan de coupe référencé X sur la figure 9,
- la figure 11 représente une vue latérale longitudinale du même contre-poids selon la vue référencée XI sur la figure 8,
- la figure 12 représente une vue en perspective du contre-poids,
- la figure 13 et la figure 14 représentent deux vues en perspective d'un capuchon de l'aiguille éclairante conforme à la présente invention,
- la figure 15 représente une vue de dessus du même capuchon,
- la figure 16 représente une vue de dessous du même capuchon,
- la figure 17 représente une vue en coupe longitudinale du capuchon selon le plan de coupe référencé XVII sur la figure 16, et
- la figure 18 représente une vue transversale du même capuchon selon le plan de coupe référencé XVIII sur la figure 15.

L'aiguille éclairante conforme à la présente invention représentée sur les figures annexées comprend essentiellement trois pièces: une pièce 100 formée d'un corps allongé 110 solidaire d'un moyeu 150, un contre-poids 200 et un capuchon 300.

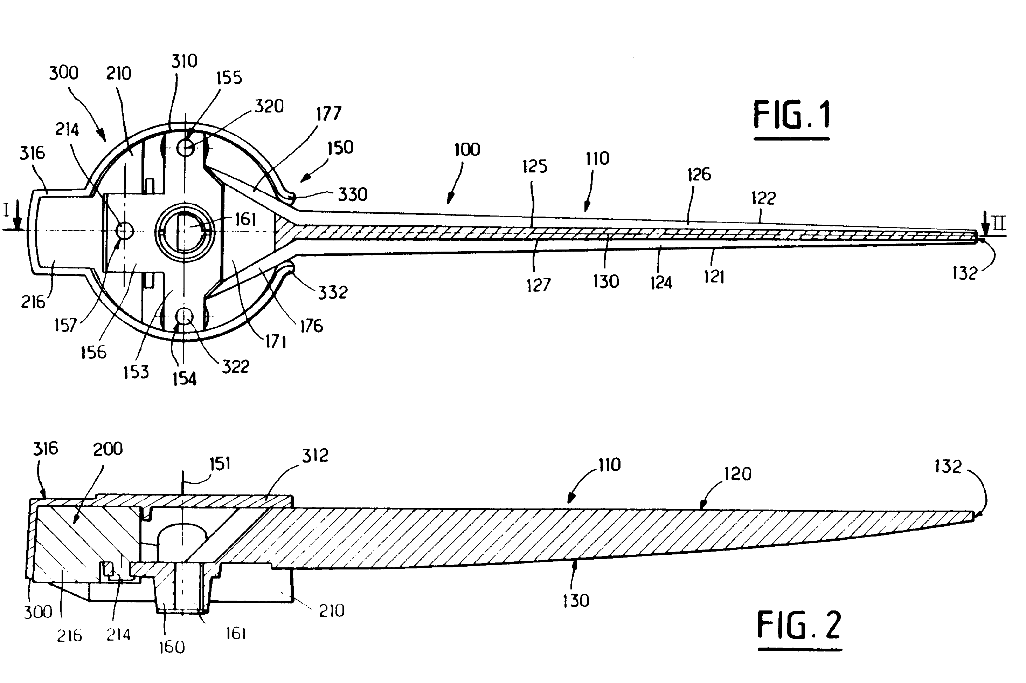

L'aiguille complète comprenant les trois pièces assemblées 100, 200 et 300 est représentée sur les figures 1 et 2.

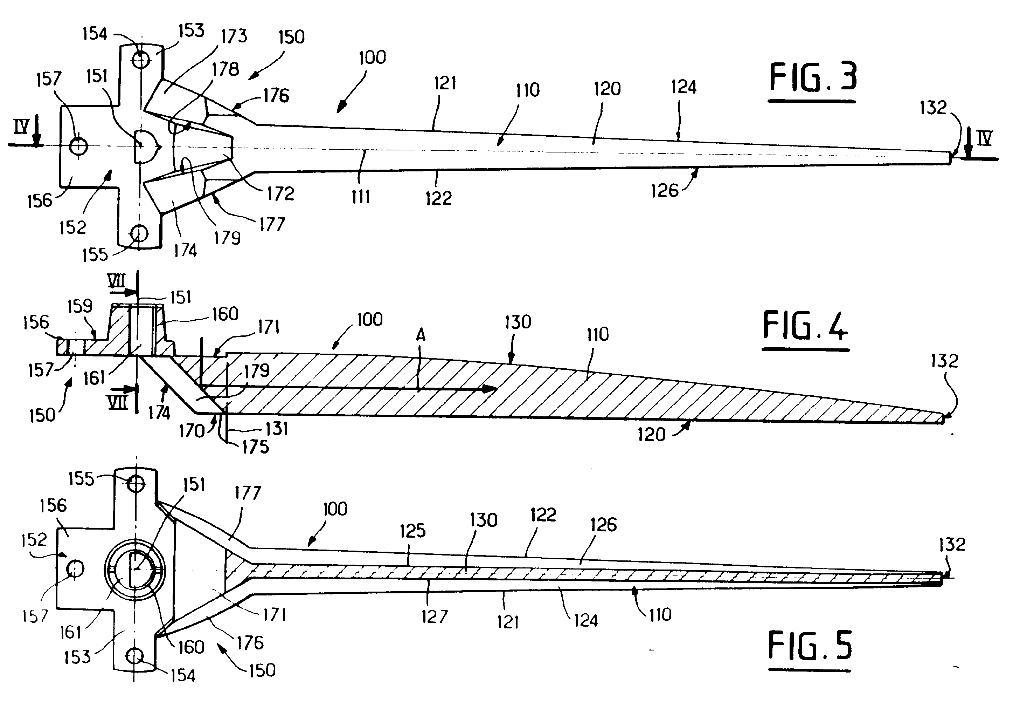

La pièce 100 formée du corps allongé 110 solidaire du moyeu 150 est représentée sur les figures 3 à 7.

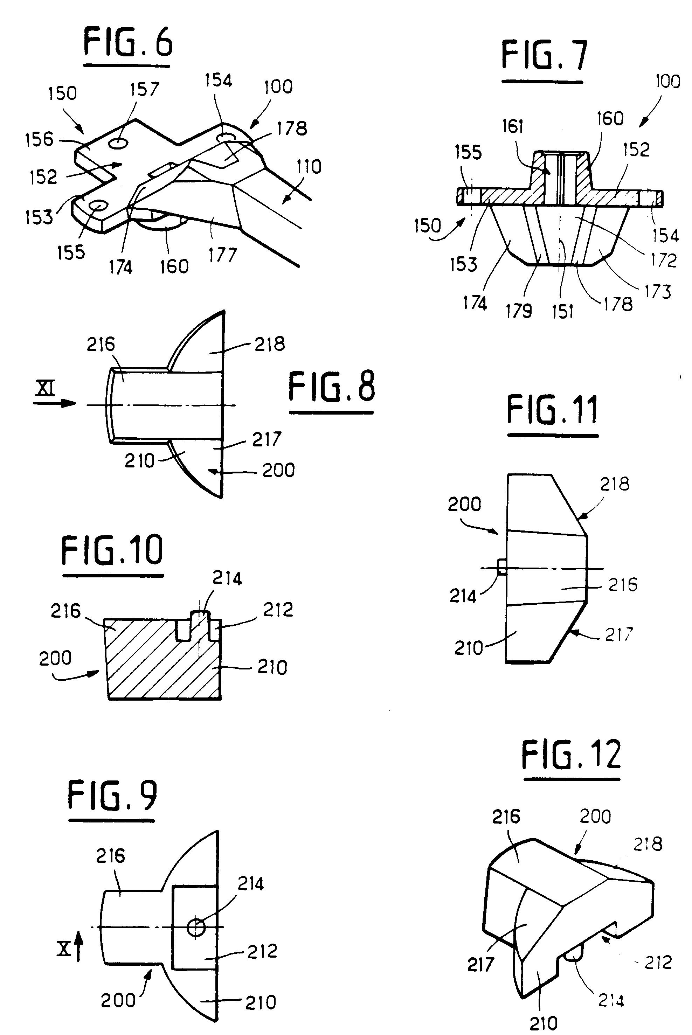

Le contre-poids 200 est représenté sur les figures 8 à 12.

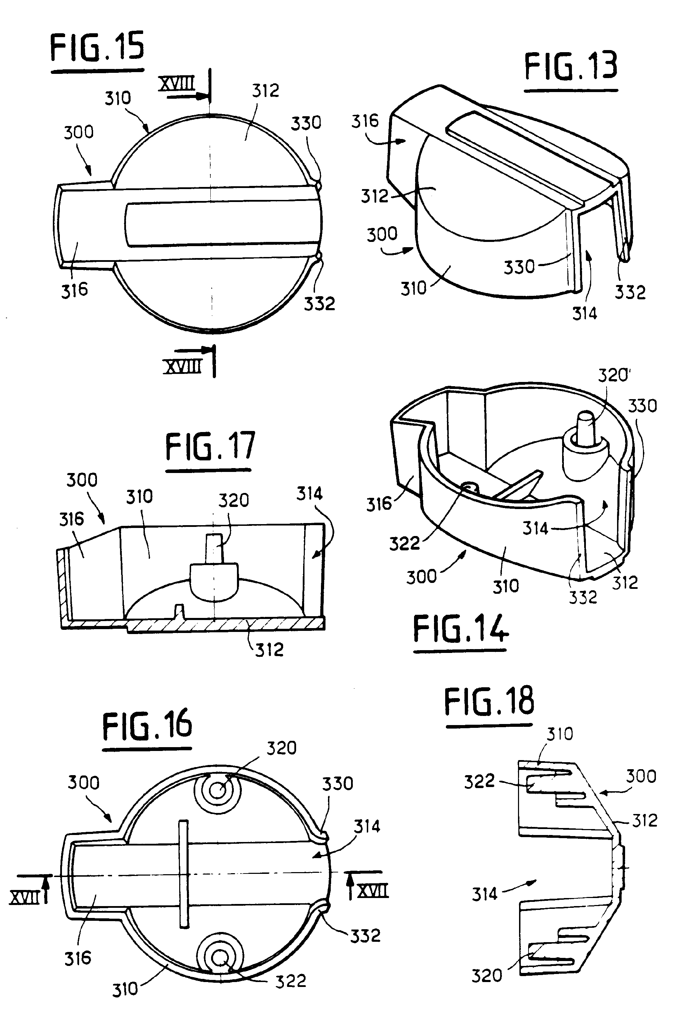

Le capuchon 300 est représenté sur les figures 13 à 18.

La pièce 100 est réalisée en matériau optiquement transparent.

Elle est réalisée de préférence par moulage d'un matériau thermoplastique.

Il s'agit très avantageusement, mais non limitativement, de polycarbonate.

Comme indiqué précédemment, la pièce 100 comprend un corps allongé 110 solidaire d'un moyeu 150.

Le corps 110 s'étend selon un axe général longitudinal 111. Le moyeu 150 est centré sur un axe 151. L'axe 111 et l'axe 151 sont sécants. Ils définissent un plan de symétrie principal pour l'aiguille éclairante. Ce plan de symétrie principal est perpendiculaire aux figures 1, 3, 5, 7, 8, 9, 11, 15, 16 et 18.

Le même plan de symétrie principal défini par les axes 111 et 151 est parallèle au plan de coupe des figures 2, 4, 10 et 17.

Le corps allongé 110 de la pièce 100 est défini par une face longitudinale avant 120, visible par l'utilisateur, deux faces longitudinales latérales 124, 126, une face longitudinale arrière 130 et une face transversale extrême 132.

La face longitudinale avant 120, visible par l'utilisateur, est de préférence plane. Elle est effilée en éloignement du moyeu 150. En d'autres termes ces bords longitudinaux 121, 122, convergent en direction de la face d'extrémité 132.

Les deux faces latérales longitudinales 124, 126 sont planes. Elles convergent d'une part en éloignement du moyeu 150. Elles convergent d'autre part, et c'est là une caractéristique essentielle de la présente invention, en éloignement de la face avant 120.

La face arrière longitudinale 130 se raccorde, par ses bords longitudinaux 125, 127 respectivement sur les faces latérales 124, 126.

La face longitudinale arrière 130 est de préférence une surface convexe cylindrique de révolution autour d'un axe normal au plan de symétrie principal défini par les axes 111, 151. Plus précisément, l'axe de la surface inférieure 130 est de préférence sécant d'une droite 131 référencée sur la figure 4 qui est elle-même contenue dans le plan de symétrie principale définie par les axes 111 et 151, et parallèles à cet axe 151. Cette droite 131 est adjacente à la zone de raccordement du corps d'aiguille 110 sur le moyeu 150. L'axe de la surface arrière 130 est situé à une distance importante du corps de l'aiguille, typiquement de l'ordre de six fois la longueur du corps allongé 110.

Ainsi, comme cela est visible notamment sur la figure 4, la hauteur des faces latérales 124, 126 diminue en direction de l'extrémité 132 du corps 110.

De préférence, comme cela est visible sur les figures 3 et 4, la hauteur des faces latérales 124, 126 au niveau de l'extrémité ou pointe 132 de l'aiguille, est sensiblement égale à la largeur de la face avant 120 à ce niveau.

Comme indiqué précédemment, le moyeu 150 est centré sur un axe 151 normal à l'axe 111 du corps allongé 110 et définissant avec celui-ci un plan de symétrie longitudinal principal pour l'aiguille.

Le moyeu 150 est conçu pour être engagé sur un arbre de commande centré sur l'axe 151 et apte à entraîner en rotation l'aiguille.

L'arbre de commande peut être par exemple formé de l'arbre de sortie d'un logomètre.

Le moyeu 150 comprend une plaque de base 152 orthogonal à l'axe 151. Plus précisément, la plaque de base 152 est formée de deux poutres orthogonales 153, 156. La poutre 153 s'étend perpendiculairement au plan de symétrie principal soit de part et d'autre de l'axe 111 et de l'axe 151.

La poutre 156 s'étend parallèlement à l'axe 111, à l'opposé du corps allongé 110, par rapport à l'axe 151.

Les deux poutres 153, 156 sont coplanaires.

Les deux branches de la poutre 153 situées respectivement de part et d'autre du plan de symétrie principal défini par les axes 111 et 151 possèdent chacun un orifice traversant 154, 155. Les axes de ces orifices traversant 154, 155 sont parallèles à l'axe 151. Les orifices 154, 155 ont pour but de recevoir des tétons venus de moulage sur le capuchon 300, pour fixer celui-ci.

La seconde poutre 156 possède également un orifice traversant 157. L'axe de cet orifice 157 est parallèle à l'axe 151 et situé dans le plan de symétrie principal de l'aiguille. L'orifice 157 est conçu pour recevoir un doigt venu de moulage sur le contre-poids 200, pour la fixation de celui-ci.

Sur la face arrière 159 de la plaque de base 152, il est prévu un manchon 160 centré sur l'axe 151. Ce manchon 160 possède un canal 161 conçu pour recevoir l'arbre de commande précité, par exemple l'arbre de sortie d'un logomètre. De préférence, le canal 161 n'est pas cylindrique de révolution autour de l'axe 151 pour permettre un détrompage, c'est-à-dire définir une position relative univoque entre le moyeu 150, donc l'aiguille, et l'arbre de commande.

Selon le mode de réalisation particulier représenté sur les figures annexées, le canal 161 a une forme hémicylindrique. Un tel canal 161 est conçu pour recevoir une pièce intermédiaire elle-même chassée sur l'arbre de commande, comme défini dans la demande de brevet FR-A-2594540.

Sur sa surface avant 162, la plaque de base 152 est munie d'une structure de réflexion 170.

Le but de cette structure 170 est de renvoyer en direction du corps allongé 110 la lumière provenant d'une source lumineuse. Très avantageusement, cette source lumineuse est placée sur l'arrière de l'aiguille et conçue pour diriger les rayons parallèlement à l'axe 151 en direction de celle-ci. Les rayons dirigés vers l'aiguille peuvent provenir directement de la source lumineuse. Cependant de préférence, les rayons sont dirigés vers l'aiguille par l'intermédiaire d'un guide optique à effet de prisme. De tels guides à effet de prisme aptes à diriger la lumière provenant d'une source lumineuse parallèlement à l'axe de l'arbre de commande d'une aiguille sont bien connus de l'homme de l'art et ne seront donc pas décrits plus en détail par la suite.

La structure de réflexion 170 est plus précisément prévue entre la poutre 153 et le corps 110.

La structure de réflexion 170 possède une face arrière 171 généralement plane et orthogonale à l'axe 151. Ainsi, la lumière provenant de la source lumineuse, et/ou du guide optique intercalé, arec une incidence parallèle à l'axe 151, traverse la face arrière 171 de la surface de réflexion 170, sans déviation.

Sur l'avant, la structure de réflexion 170 est définie essentiellement par trois surfaces de réflexion: une surface centrale 172 et deux surfaces latérales 173, 174.

Ces surfaces de réflexion 172, 173, 174 sont définies généralement par des génératrices à 45° des axes 111 et 151, afin de travailler à la façon de prisme pour renvoyer la lumière arrivant sur l'aiguille avec une incidence parallèle à l'axe 151, dans une direction générale parallèle à l'axe 111, soit en direction du corps allongé 110.

Les surfaces de réflexion 172, 173, 174 peuvent être planes. Cependant, de préférence les surfaces 172, 173 et 174 sont des surfaces coniques, convexes centrées sur un axe paralèlle à l'axe 151 et contenues dans le plan de symétrie longitudinal de l'aiguille.

La majeure partie de la lumière traversant la face arrière 171 de la structure de réflexion et qui parvient sur la surface de réflexion centrale 172 est renvoyée par effet de prisme en direction de la face arrière 130 du corps allongé 110, comme représenté sur la figure 4 sous la référence A. Ainsi, cette surface arrière A reçoit de la lumière sur la totalité de sa longueur.

La surface arrière 130 renvoit elle-même par réflexion la lumière qu'elle reçoit en direction de la face avant 120.

Le cas échéant, la face arrière 130 peut être munie d'un revêtement coloré ou diffusant.

Une partie de la lumière renvoyée par la face de réflexion centrale 172 parvient par ailleurs sur les surfaces latérales 124, 126 du corps allongé 110.

Enfin, les deux faces latérales de réflexion 173, 174 renvoient, respectivement en direction des faces latérales 126, 124, la lumière qui traverse la face arrière 171.

La lumière qui parvient sur les surfaces latérales 124, 126 subit une série de réflexion telle que, compte-tenu de la convergence des faces latérales 124, 126 en éloignement de la face avant 120, la lumière avance progressivement en direction de la face avant de l'aiguille 120.

L'ensemble des réflexions ainsi définies par les surfaces 172, 173, 174, la face arrière 130 et les faces latérales 124, 126 permet d'éclairer les flans 124, 126 du corps d'aiguille 110 et d'obtenir une luminescence sensiblement homogène sur la totalité de la longueur du corps 110.

On notera que la structure de réflexion 170 représentée sur les figures annexées se complète par une face avant 175 généralement plane et coplanaire de la face avant 120 du corps 110.

La structure de réflexion 170 se complète par ailleurs, par deux faces latérales extérieures généralement planes 176, 177 qui convergent d'une part en direction du corps 110, d'autre part en éloignement de la face avant 175.

Enfin, la structure de réflexion 110 se complète par deux facettes 178, 179 qui raccordent la surface de réflexion centrale 172 respectivement aux deux surfaces de réflexion latérales 173, 174.

On va maintenant décrire le contre-poids 200 représenté sur les figures 8 à 12.

Le contre-poids 200 est conçu pour être fixé sur le talon de l'aiguille, c'est-à-dire sur la poutre 156, afin d'équilibrer l'aiguille par rapport à l'axe 151, le corps allongé 110 étant beaucoup plus étendu que la poutre 152.

Toutefois, un tel contre-poids 200 est susceptible de faire l'objet de nombreuses variantes de réalisation. Pour cette raison, le contre-poids 200 représenté sur les figures 8 à 12 ne sera pas décrit dans le détail par la suite.

Le contre-poids 200 peut être formé par exemple à base de métal.

Pour l'essentiel, le contre-poids 200 comprend un bloc 210 formé d'un secteur de cylindre centré sur un axe qui coïncide avec l'axe 151 après assemblage. Ce bloc 210 possède sur sa face arrière un évidement parallélépipédique 212 complémentaire de la poutre 156. Au niveau de l'évidement 212 le contre-poids 200 est muni d'un doigt 214 conçu pour pénétrer dans l'orifice 157. Par ailleurs, le bloc 210 se prolonge vers l'arrière par un talon 216 généralement parallélépipédique. Ce talon 216 216 est opposé au corps allongé 110 après assemblage.

De préférence, comme cela est représenté sur les figures 11 et 12, la surface avant du bloc 210 présente de préférence deux surfaces tronquées 217, 218 disposées de part et d'autre du plan de symétrie longitudinal principal de l'aiguille.

On va maintenant décrire la structure du capuchon d'habillage représenté sur les figures 13 à 18.

Ce capuchon 300 est conçu pour parfaire l'esthétique de l'aiguille en recouvrant le contre-poids 200 et le moyeu 150 de l'aiguille.

De préférence, le capuchon 300 est réalisé d'une pièce par moulage d'un matériau thermoplastique, très avantageusement de couleur noire.

Toutefois, le capuchon 300 étant également susceptible de faire l'objet de nombreuses variantes de réalisation, la structure du capuchon représenté sur les figures 13 à 18 ne sera pas décrite dans le détail par la suite.

Pour l'essentiel, le capuchon 300 comprend une jupe cylindrique 310 obturée sur l'avant par une toile 312. Au niveau du corps allongé 110, la jupe 310 est munie d'une fenêtre rectangulaire 314 permettant le passage du corps 110. La juge 310 est en outre munie d'une extension 316 en forme générale de carter parallélépipédique destinée à recevoir le talon 216 du contre-poids.

Sur sa surface interne, la toile 312 est munie de deux tétons 320, 322 destinés à pénétrer respectivement dans les orifices 154, 155 de la pièce 100. Lorsque les extrémités des tétons 320, 322 sont serties sur la pièce 100, ou collées sur celles-ci, l'aiguille est assemblée.

On notera que, comme cela est visible en particulier sur les figures 13, 14, 15 et 16, la jupe cylindrique 310 est munie, au niveau de la fenêtre 314 de deux toiles 330, 332. Ces toiles 330, 332 sont généralement planes, dirigées vers l'extérieur de la jupe 310 et parallèles à l'axe 151.

Les toiles 330, 332 sont conçues pour cacher efficacement le moyeu 150 et éviter l'apparition de points lumineux de forte luminescence au niveau des surfaces de réflexion 172, 173, 174 notamment.

Les toiles 330, 332 sont placées sur l'extérieur des faces latérales 124, 126 du corps allongé 110.

A titre d'exemple non limitatif :
- la distance séparant l'extrémité 132 du corps allongé 110 de l'axe 151 peut être comprise entre 40 et 60mm,
- le rayon de courbure de la surface arrière 130 peut être de l'ordre d'au moins six fois la distance séparant l'extrémité 132 de l'axe 151, typiquement de l'ordre de 360mm,
- l'angle de convergence entre les faces latérales 124, 126 du corps allongé d'aiguille est de préférence compris entre 10 et 60°, typiquement de l'ordre de 30°.

## Revendications

1. Aiguille éclairante du type comprenant une pièce (100) formée d'un corps allongé (110) en matériau optiquement transparent solidaire d'un moyeu (150), le corps allongé (110) possèdant au moins une face avant (120) et deux faces latérales (124, 126) caractérisée par le fait que lesdites faces latérales convergent en éloignement de la face avant (120) et que le moyeu (150) possède au moins une structure de réflexion (170) apte à renvoyer la lumière provenant d'une source lumineuse en direction des faces latérales (124, 126) du corps.

2. Aiguille éclairante selon la revendication 1, caractérisée par le fait que le corps allongé (110) comprend une face inférieure (130) cylindrique de révolution.

3. Aiguille éclairante selon l'une des revendications 1 ou 2, caractérisée par le fait que la structure de réflexion (170) comprend deux surfaces de réflexion (173, 174) conçues pour renvoyer la lumière provenant d'une source lumineuse en direction respectivement de chacune des deux faces latérales convergentes (124, 126) du corps allongé (110).

4. Aiguille éclairante selon l'une des revendications 1 à 3, caractérisée par le fait que la structure de réflexion (170) comprend une surface (172) apte à renvoyer la lumière provenant d'une source lumineuse en direction de la face arrière (130) du corps allongé (110).

5. Aiguille éclairante selon l'une des revendications 1 à 4, caractérisée par le fait que la structure de réflexion (170) comprend trois surfaces de réflexion (172, 173, 174) conçues pour renvoyer la lumière provenant d'une source lumineuse en direction de la face arrière (130) et des deux faces latérales (124, 126) du corps allongé (110).

6. Aiguille éclairante selon l'une des revendications 1 à 5, caractérisée par le fait que le corps allongé (110) comprend une surface supérieure (120) plane.

7. Aiguille éclairante selon l'une des revendications 1 à 6, caractérisée par le fait que les surfaces de réflexion (172, 173, 174) sont définies par des génératrices disposées sensiblement à 45° de l'axe (151) du moyeu (150).

8. Aiguille éclairante selon l'une des revendications 1 à 7, caractérisée par le fait que les surfaces de réflexion (172, 173, 174) sont généralement planes.

9. Aiguille éclairante selon l'une des revendications 1 à 7, caractérisée par le fait que les surfaces de réflexion (172, 173, 174) sont généralement coniques.

10. Aiguille éclairante selon l'une des revendications 1 à 9, caractérisée par le fait que l'angle de convergence entre les faces latérales (124, 126) du corps allongé (110) est compris entre 10 et 60° typiquement de l'ordre de 30°.

11. Aiguille éclairante selon l'une des revendications 1 à 10, caractérisée par le fait que le corps allongé (110) est réalisé en polycarbonate.

12. Aiguille éclairante selon l'une des revendications 1 à 11, caractérisée par le fait que le moyeu de la pièce allongée (100) optiquement transparente supporte un contre-poids (200) et un capuchon d'habillage (300).

13. Aiguille éclairante selon la revendication 12, caractérisée par le fait que le capuchon (300) comprend une jupe généralement cylindrique (310) pourvue d'une fenête (314) permettant le passage du corps allongé (110), la jupe (310) étant munie de deux toiles dirigées vers l'extérieur et placées respectivement contre les faces latérales (124, 126) du corps allongé (110).

## Patentansprüche

1. Leuchtzeiger der Bauart mit einem Teil (100), welches aus einem länglichen Körper (110) aus einem lichtdurchlässigen Werkstoff einstückig mit einer Nabe (150) ausgebildet ist, wobei der längliche Körper (110) mindestens eine Stirnfläche (120) und zwei Seitenflächen (124, 126) aufweist, dadurch gekennzeichnet dass die Seitenflächen in Richtung zum entfernten Ende der Stirnfläche (120) konvergieren, und dass die Nabe (150) mindestens eine Reflexionsstruktur (170) aufweist, welche das Licht, das von einer Lichtquelle stammt, in Richtung der Seitenflächen (124, 126) des Körpers zurückstrahlen kann.

2. Leuchtzeiger nach Anspruch 1, dadurch gekennzeichnet, daß der längliche Körper (110) eine drehzylinderförmige Unterseite (130) aufweist.

3. Leuchtzeiger nach einem der Ansprüche 1 oder 2, dadurch gekennzeichnet, daß die Reflexionsstruktur (170) zwei Reflexionsflächen (173, 174) aufweist, welche das Licht, das von einer Lichtquelle stammt, in Richtung jeweils jeder der beiden konvergierenden Seitenflächen (124, 126) des länglichen Körpers (110) zurückstrahlen können.

4. Leuchtzeiger nach einem der Ansprüche 1 bis 3, dadurch gekennzeichnet, daß die Reflexionsstruktur (170) eine Oberfläche (172) aufweist, welche das Licht, das von einer Lichtquelle stammt, in Richtung der Rückseite (130) des länglichen Körpers (110) zurückstrahlen kann.

5. Leuchtzeiger nach einem der Ansprüche 1 bis 4, dadurch gekennzeichnet, daß die Reflexionsstruktur (170) drei Reflexionsflächen (172, 173, 174) aufweist, welche das Licht, das von einer Lichtquelle stammt, in Richtung der Rückseite (130) und der beiden Seitenflächen (124, 126) des länglichen Körpers (110) zurückstrahlen können.

6. Leuchtzeiger nach einem der Ansprüche 1 bis 5, dadurch gekennzeichnet, daß der längliche Körper (110) eine ebene obere Oberfläche (120) aufweist.

7. Leuchtzeiger nach einem der Ansprüche 1 bis 6, dadurch gekennzeichnet, daß die Reflexionsflächen (172, 173, 174) durch Mantellinien begrenzt sind, welche mit der Achse (151) der Nabe (150) einen Winkel von ungefähr 45° einschließen.

8. Leuchtzeiger nach einem der Ansprüche 1 bis 7, dadurch gekennzeichnet, daß die Reflexionsflächen (172, 173, 174) im wesentlichen eben sind.

9. Leuchtzeiger nach einem der Ansprüche 1 bis 7, dadurch gekennzeichnet, daß die Reflexionsflächen (172, 173, 174) im wesentlichen konisch sind.

10. Leuchtzeiger nach einem der Ansprüche 1 bis 9, dadurch gekennzeichnet, daß der Konvergenzwinkel zwischen den Seitenflächen (124, 126) des länglichen Körpers (110) zwischen 10° und 60°, typischerweise in der Ordnung von 30° liegt.

11. Leuchtzeiger nach einem der Ansprüche 1 bis 10, dadurch gekennzeichnet, daß der längliche Körper (110) aus Polycarbonat besteht.

12. Leuchtzeiger nach einem der Ansprüche 1 bis 11, dadurch gekennzeichnet, daß die Nabe des lichtdurchlässigen länglichen Teiles (100) ein Gegengewicht (200) und eine Ummantelungskappe (300) trägt.

13. Leuchtzeiger nach Anspruch 12, dadurch gekennzeichnet, daß die Kappe (300) einen im wesentlichen zylindrischen Mantel (310) aufweist, in dem ein Fenster (314) vorgesehen ist, durch welches der längliche Körper (110) hindurchgeführt werden kann, wobei der Mantel (310) zwei Wandflächen aufweist, die nach außen gerichtet sind und jeweils an den Seitenflächen (124, 126) des länglichen Körpers (110) anliegen.

## Claims

1. Illuminated pointer of the type comprising a piece (100) formed from an elongate body (110) made of optically transparent material fixed to a hub (150), the elongate body (110) having at least one front face (120) and two lateral faces (124, 126) characterised in that said lateral faces converge away from the front face (120) and the hub (150) has at least one reflective structure (170) able to reflect the light coming from a light source in the direction of the lateral faces (124, 126) of the body.

2. Illuminated pointer according to Claim 1, characterised in that the elongate body (110) comprises a cylindrical bottom face (130).

3. Illuminated pointer according to either one of Claims 1 or 2, characterised in that the reflective structure (170) comprises two reflective surfaces (173, 174) designed to reflect the light coming from a light source in the direction of each of the two converging lateral faces (124, 126), respectively, of the elongate body (110).

4. Illuminated pointer according to one of Claims 1 to 3, characterised in that the reflective structure (170) comprises a surface (172) able to reflect the light coming from a light source in the direction of the rear face (130) of the elongate body (110).

5. Illuminated pointer according to one of Claims 1 to 4, characterised in that the reflective structure (170) comprises three reflective surfaces (172, 173, 174) designed to reflect the light coming from a light source in the direction of the rear face (130) and two lateral faces (124, 126) of the elongate body (110).

6. Illuminated pointer according to one of Claims 1 to 5, characterised in that the elongate body (110) comprises a flat top surface (120).

7. Illuminated pointer according to one of Claims 1 to 6, characterised in that the reflective surfaces (172, 173, 174) are defined by generating lines disposed substantially at 45° to the axis (151) of the hub (150).

8. Illuminated pointer according to one of Claims 1 to 7, characterised in that the reflective surfaces (172, 173, 174) are generally flat.

9. Illuminated pointer according to one of Claims 1 to 7, characterised in that the reflective surfaces (172, 173, 174) are generally conical.

10. Illuminated pointer according to one of Claims 1 to 9, characterised in that the angle of convergence between the lateral faces (124, 126) of the elongate body (110) is between 10° and 60°, and typically around 30°.

11. Illuminated pointer according to one of Claims 1 to 10, characterised in that the elongate body (110) is made of polycarbonate.

12. Illuminated pointer according to one of Claims 1 to 11, characterised in that the hub of the optically transparent elongate piece (100) supports a counterweight (200) and a covering cap (300).

13. Illuminated pointer according to Claim 12, characterised in that the cap (300) comprises a generally cylindrical skirt (310) provided with an aperture (314) enabling the elongate body (110) to pass through, the skirt (310) being provided with two projections directed outwards and placed respectively against the lateral faces (124, 126) of the elongate body (110).
